# EUROPEAN PATENT APPLICATION

(11) **EP 4 553 951 A1**
(43) Date of publication of application: **14.05.2025**
(21) Application number: 24186194.7
(22) Date of filing: 03.07.2024
(51) Int. Cl.: H01M 10/48, H01M 10/613, H01M 10/647, H01M 10/654, H01M 10/0587, H01M 10/6551, H01M 50/103, H01M 10/0525, H01M 50/474

(54) **BATTERY, BATTERY MODULE, BATTERY PRODUCTION SYSTEM, AND METHOD FOR ASSEMBLING BATTERY**

(30) Priority: 09.11.2023 CN 202323047580 U; 09.11.2023 CN 202323066266 U; 31.01.2024 WO PCT/CN2024/074876
(71) Applicant: Eve Energy Co., Ltd., Huizhou, Guangdong 516006 (CN)
(72) Inventor: YI, Yanhui, Huizhou, Guangdong, 516006 (CN); FANG, Zhenxing, Huizhou, Guangdong, 516006 (CN); GUO, Jiahao, Huizhou, Guangdong, 516006 (CN); TAN, Xianyang, Huizhou, Guangdong, 516006 (CN); SUN, Fei, Huizhou, Guangdong, 516006 (CN); CHENG, Cheng, Huizhou, Guangdong, 516006 (CN); TAN, Mingsheng, Huizhou, Guangdong, 516006 (CN); YUAN, Dingding, Huizhou, Guangdong, 516006 (CN)
(74) Representative: Murgitroyd & Company

(57) **Abstract**

The present disclosure provides a battery, a battery module, a battery production system, and a method for assembling a battery. The battery includes: at least two cores; a vapor chamber assembly disposed between any two adjacent ones of the cores, where an end surface of the vapor chamber assembly close to the cores is provided with at least one groove; and a first temperature sensor disposed in the groove.

## Description

### TECHNICAL FIELD

The present disclosure relates to the field of battery technologies, and more particular to a battery, a battery module, a battery production system, and a method for assembling a battery.

### BACKGROUND

As a real-time detection means, a sensing technology has been applied to collect physical field information such as battery temperature, strain, and air pressure, and a battery management system (BMS) is formed based on the sensing technology. However, in the related art, the module-level-based sensing technology is usually attached to a surface of a battery to only measure the information of the surface of the battery, and cannot fully meet an urgent need for an effective early warning due to a gradient effect and a local effect. In contrast, an implanted sensor located inside the battery can quickly and accurately obtain the information inside the battery, but how to implant the sensor inside the battery while minimizing the influence on the operation of the battery is an urgent problem to be solved.

### SUMMARY

The present disclosure provides a battery, a battery module, a battery production system, and a method for assembling a battery, to solve the above technical problems.

In a first aspect, embodiments of the present disclosure provide a battery, including: at least two cores disposed side by side; a vapor chamber assembly disposed between any two adjacent ones of the cores, where an end surface of the vapor chamber assembly close to the cores is provided with at least one groove; and a first temperature sensor disposed in the groove.

In a second aspect, embodiments of the present disclosure provide a battery module, including: the battery according to any one of the foregoings and a case body, where the battery is disposed inside the case body.

In a third aspect, embodiments of the present disclosure provide a battery production system, including: a first preparing unit for preparing an electrode assembly; a baking unit located downstream of the first preparing unit and configured to bake the electrode assembly; a first fitting unit located downstream of the baking unit and configured to prepare tabs on the baked electrode assembly to form one or more cores; a first assembling unit located downstream of the first fitting unit and configured to assembly a plurality of cores to form a core module; a second fitting unit located downstream of the first assembling unit and configured to weld a connection sheet and a cover plate onto the core module to form an assembly; a second assembling unit located downstream of the second fitting unit and configured to assembly a vapor chamber assembly, a battery management module, and the assembly to form a member to be packaged; and a packaging unit located downstream of the second assembling unit and configured to package the member to form a battery.

In a fourth aspect, embodiments of the present disclosure provide a method for assembling a battery, the method be configured to prepare the above battery by using the above battery production system, where the method includes: preparing an electrode assembly; baking the electrode assembly; preparing tabs on the baked electrode assembly to form one or more cores; drying a prepared vapor chamber; and assembling the dried vapor chamber and the baked cores.

The beneficial effects of the present disclosure are as follows:
(1) The present disclosure provides the battery including the vapor chamber assembly. By disposing the groove for placing the first temperature sensor on the vapor chamber assembly, it is possible to dispose the first temperature sensor inside without the need for the core to provide a mounting space for the first temperature sensor, thereby improving the technical problem that the first temperature sensor is disposed on the surface of the vapor chamber to affect the electric performance of the battery.
(2) The present disclosure provides the battery module including the battery having the vapor chamber assembly. By disposing the groove for placing the first temperature sensor on the vapor chamber assembly, it is possible to dispose the first temperature sensor inside without the need for the core to provide a mounting space for the first temperature sensor, thereby improving the technical problem that the first temperature sensor is disposed on the surface of the vapor chamber to affect the electric performance of the battery module.
(3) The present disclosure provides the battery production system, including the first preparing unit, the baking unit, the first fitting unit, the first assembling unit, the second fitting unit, the second assembling unit, and the packaging unit sequentially arranged in an upstream-downstream order. According to the battery production system provided in the present disclosure, after the electrode assembly has been prepared, the electrode assembly is baked; after the electrode assembly has been baked, the tabs are prepared on the electrode assembly to form cores; after the cores have been prepared, the plurality of ones of the cores are assembled to form the core module; after the core module has been assembled, the core module is connected with the connection sheet and the cover plate to form the assembly; and after the assembly is formed, the assembly is assembled with the vapor chamber and the battery management module to form the member to be packaged, and the member is packaged to form the battery. That is, in the present disclosure, the cores are separately baked, and then assembled with the vapor chamber, so that explosion caused by expansion of the vapor chamber and the cores due to high-temperature baking of the vapor chamber and the cores is avoided, and safety of battery production is improved.
(4) The present disclosure provides the method for assembling the battery. After the electrode assembly has been prepared, the cores are baked. After the electrode assembly has been baked, the tabs are prepared on the electrode assembly to form cores. After the cores have been prepared, the cores are assembled, so that explosion caused by expansion of the vapor chamber and the battery due to high-temperature baking of the vapor chamber and the battery is avoided, and safety of battery production is improved. The vapor chamber is dried to remove moisture on the vapor chamber.

### DESCRIPTION OF THE DRAWINGS

FIG. 1 is an axis-side schematic diagram of a battery according to some embodiments of the present disclosure.
FIG. 2 is an axis-side schematic diagram of a battery not including a core according to some embodiments of the present disclosure.
FIG. 3 is an axis-side schematic diagram of a vapor chamber assembly according to some embodiments of the present disclosure.
FIG. 4 is an axis-side schematic diagram of a first vapor chamber according to some embodiments of the present disclosure.
FIG. 5 is an axis-side schematic diagram of a second vapor chamber according to some embodiments of the present disclosure.
FIG. 6 is an axis-side schematic diagram of a vapor chamber assembly according to some embodiments of the present disclosure.
FIG. 7 is a schematic structural diagram of a battery production system according to some embodiments of the present disclosure.
FIG. 8 is a schematic structural diagram of another battery production system according to some embodiments of the present disclosure.
FIG. 9 is a schematic structural diagram of yet another battery production system according to some embodiments of the present disclosure.
FIG. 10 is a schematic structural diagram of a first preparing unit according to some embodiments of the present disclosure.
FIG. 11 is a schematic structural diagram of another first preparing unit according to some embodiments of the present disclosure.
FIG. 12 is a schematic structural diagram of a first fitting unit according to some embodiments of the present disclosure.
FIG. 13 is a schematic structural diagram of a second fitting unit according to some embodiments of the present disclosure.
FIG. 14 is a schematic structural diagram of a drying unit according to some embodiments of the present disclosure.
FIG. 15 is a schematic structural diagram of a packaging unit according to some embodiments of the present disclosure.

Description of reference numbers: 1. First core; 2. Second core; 3. Vapor chamber assembly; 31. Groove; 32. First vapor chamber; 321. First main plate; 322. First flange; 33. Second vapor chamber; 331. Second main plate; 332. Second flange; 34. Notch; 35. Bottom plate; 36. Vertical plate; 4. First temperature sensor; 5. Cover plate; 6. Chip; 100. First preparing unit; 200. Baking unit; 300. First fitting unit; 400. First assembling unit; 500. Second fitting unit; 600. Second assembling unit; 700. Packaging unit; 800. Detection unit; 900. Liquid injection unit; 10. Second preparing unit; 20. Drying unit; 21. Drying controller; 22. Dehumidification device; 23. Thermostat device; 24. Humidity sensor; 25. Second temperature sensor; 101. First splitting subunit; 102. Stacking subunit; 103. First hot pressing subunit; 104. Second splitting subunit; 105. Winding subunit; 106. Second hot pressing subunit; 301. Tab welding subunit; 302. Tab cutting subunit; 501. First welding subunit; 502. Second welding subunit; 701. First packaging subunit; and 702. Third welding subunit.

### DETAILED DESCRIPTION

### A first embodiment

An ultra-thin vapor chamber is a heat transfer element having an ultra-high thermal conductivity, which is generally composed of a housing, a support column, a vacuum chamber (a steam chamber), a wick, and a working medium, and high-efficiency heat transfer is realized by huge phase-change latent heat caused by change between a vapor phase and a liquid phase of the internal working medium. A process for the ultra-thin vapor chamber to complete internal gas-liquid circulation phase change heat transfer may include: at an evaporation end, a liquid working medium soaked in the wick transmits and absorbs heat of a heat source through the housing, an evaporation phase change of the liquid working medium occurs in the vacuum chamber to enable the liquid working medium to become a vapor working medium, the change of the liquid phase to the vapor phase quickly takes away a lot of heat, and the vapor working medium quickly flows and diffuses to a condensing end by means of a vapor pressure difference in the vacuum chamber; and at the condensation end, the vapor working medium transmits heat taken away by a cold source through the housing, and a condensation phase change of the vapor working medium occurs to enable the vapor working medium to become the liquid working medium, and the change of the vapor phase to the liquid phase quickly takes away a lot of heat, and the liquid working medium is driven by capillary pressure of the wick to flow back to the evaporation end and continue to absorb heat to complete the whole vapor-liquid circulation.

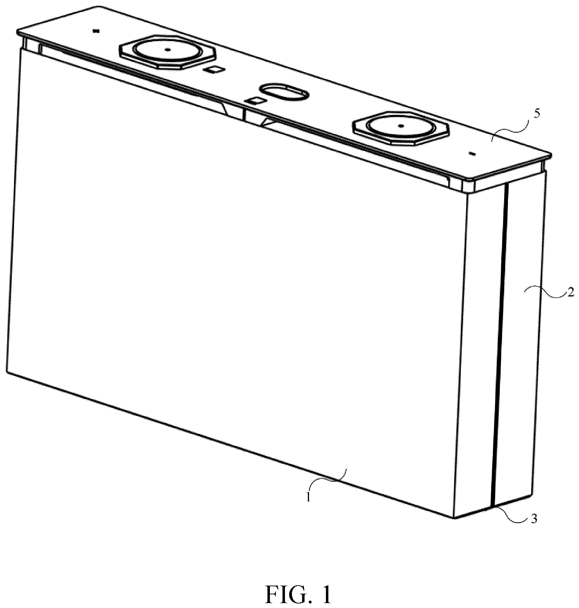

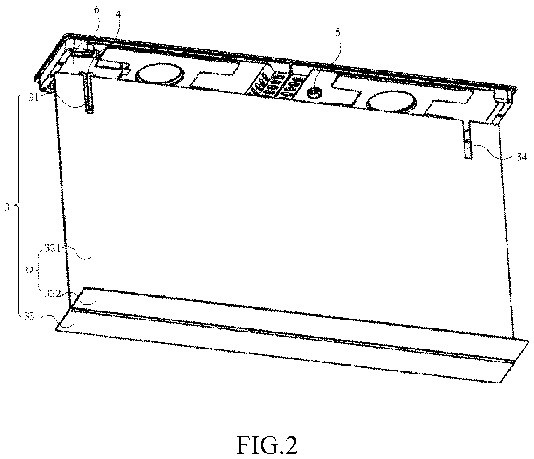

As shown in FIGS. 1 and 2, the present disclosure discloses a battery, including: at least two cores, a vapor chamber assembly 3, and a first temperature sensor 4, where the at least two cores are disposed side by side, the vapor assembly 3 is disposed between any two adjacent ones of the cores and in contact with the adjacent cores, and heat conduction is performed between the vapor chamber assembly 3 and the adjacent cores, so that the temperature of the cores and the temperature of the vapor chamber assembly 3 may tend to be the same. In an energy storage battery and an energy storage system, the temperature is one of the parameters of interest, and the addition of the vapor chamber assembly 3 may effectively reduce the temperature inside the battery.

Based on the heat conduction of the vapor chamber assembly 3, the temperatures of the cores and the vapor chamber assembly 3 may tend to be the same, and the collected temperature of the vapor chamber assembly 3 may be equivalent to the temperature of the cores. The first temperature sensor 4 is therefore disposed on the vapor chamber assembly 3 to collect the temperature of the cores.

The thickness of the first temperature sensor 4 has a great influence on the electric performance of the battery during the later cycle with respect to a space margin in the width direction of the battery inside the battery, so that the thickness of the first temperature sensor 4 is diluted by digging a groove 31 in the vapor chamber assembly 3. That is, an end surface of the vapor chamber assembly 3 close to the cores is provided with a groove 31 for placing the first temperature sensor 4.

In addition, since the vapor chamber assembly 3 need to transfer heat by means of the internal vacuum chamber, the groove 31 is disposed on the vapor chamber assembly 3 for placing the first temperature sensor 4, instead of digging through the vapor chamber assembly 3 to provide a through hole for placing the first temperature sensor 4, so as to minimize the influence of a space excavated during excavating the groove 31 on the heat conduction effect of the vapor chamber assembly 3. The first temperature sensor 4 is placed in the groove 31, so that a contact surface between the first temperature sensor 4 and the vapor chamber assembly 3 can be increased, to enable the temperature information collected by the first temperature sensor 4 to be more accurate.

The vapor chamber assembly 3 may be provided with a plurality of grooves 31 for placing a plurality of first temperature sensors 4, where each of the first temperature sensors 4 corresponds to respective one of the grooves 31, or each of the grooves 31 is configured to place two or more ones of the first temperature sensors 4. The plurality of first temperature sensors 4 may collect a plurality of pieces of temperature data for screening analysis, so as to improve the accuracy of the collected temperature data. However, based on a soaking function of the vapor chamber assembly 3 and minimizing the influence of the excavating of the grooves on the vapor chamber assembly 3, it is preferable that only one groove 31 is provided in the vapor chamber assembly 3 for placing one first temperature sensor 4.

In the present embodiment, the groove 31 is provided in the vapor chamber assembly 3 for placing the first temperature sensor 4. On the one hand, the influence of the thickness of the first temperature sensor 4 on the electric performance of the battery is reduced. On the other hand, in order to minimize the influence of the arrangement of the first temperature sensor 4 on the area of the vacuum chamber inside the vapor chamber assembly 3, the groove 31 is provided instead of the through hole, so that the influence of the placing of the first temperature sensor 4 on the heat conduction effect of the vapor chamber assembly 3 is reduced.

In some embodiments, the thickness of the first temperature sensor 4 is less than or equal to the depth of the groove 31 in the side-by-side extension direction of the cores. That is, the first temperature sensor 4 is not disposed beyond the surface of the vapor chamber assembly 3 to interfere with the surface of the vapor chamber assembly 3, so that the first temperature sensor 4 may be not protruded from the surface of the vapor chamber assembly 3, thereby preventing the first temperature sensor 4 from affecting the fit of the surface of the vapor chamber assembly with the cores and further avoiding the influence of the thickness of the first temperature sensor 4 on the electrical performance of the battery.

In some embodiments, when the battery may include two cores, i.e., a first core 1 and a second core 2, the first core 1 and the second core 2 are arranged side by side in a first direction. When the battery may include a plurality of cores, the plurality of cores may be arranged in a linear array in the first direction. One vapor chamber assembly 3 may be provided between any two adjacent ones of the cores. The plurality of cores may also be arranged in any manner, and each of the cores is adjacent to another one of the cores. One vapor chamber assembly 3 may be provided between any two adjacent ones of the cores.

As shown in FIG. 2, the vapor chamber assembly 3 may include a first vapor chamber 32 and a second vapor chamber 33. During assembling of the battery, the first core 1 of the two cores is first connected to the first vapor chamber 32, and then the second core 2 of the two cores is connected to the second vapor chamber 33, and the first vapor chamber 32 is connected with the second vapor chamber 33 by means of bonding or the like.

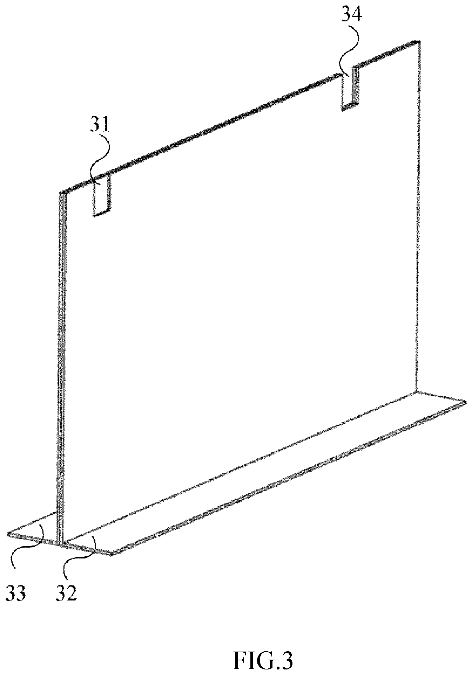

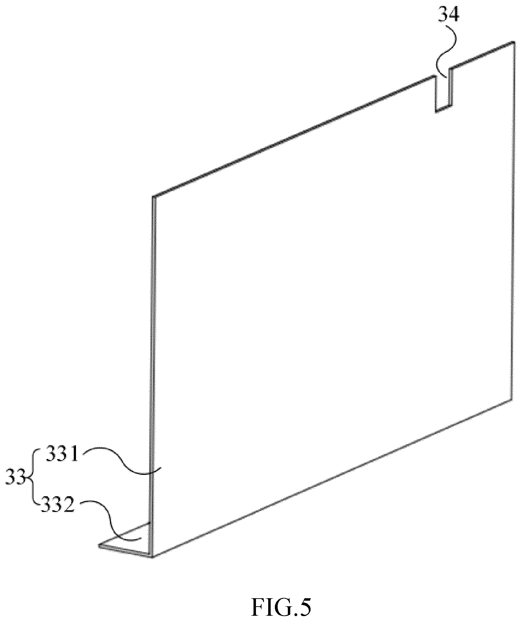

In some embodiments, as shown in FIGS. 3 to 5, the first vapor chamber 32 may include a first main plate 321 and a first flange 322 provided at one end of the first main plate 321, and the second vapor chamber 33 may include a second main plate 331 and a second flange 332 provided at one end of the second main plate 331, where the first main plate 321 is connected with the second main plate 331 by means of bonding or the like, the first main plate 321 and the second main plate 331 are provided between the first core 1 and the second core 2, the first main plate 321 is provided between the first core 1 and the second main plate 331, and the second main plate 331 is provided between the second core 2 and the first main plate 321.

The first flange 322 may be provided at the bottom of the first core 1 and extend from one end of the first main plate 321 to a direction away from the second core 2, that is, the first flange 322 may be perpendicular to the first main plate 321. The first vapor chamber 32 may be L-shaped and surround one edge of the first core 1. The first flange 322 may be used to support the first core 1.

Similarly, the second flange 332 may be provided at the bottom of the second core 2 and extend from one end of the second main plate 331 to a direction away from the first core 1, that is, the second flange 332 may be perpendicular to the second main plate 331. The second vapor chamber 33 may be L-shaped and surround one edge of the second core 2. The second flange 332 may be used to support the second core 2.

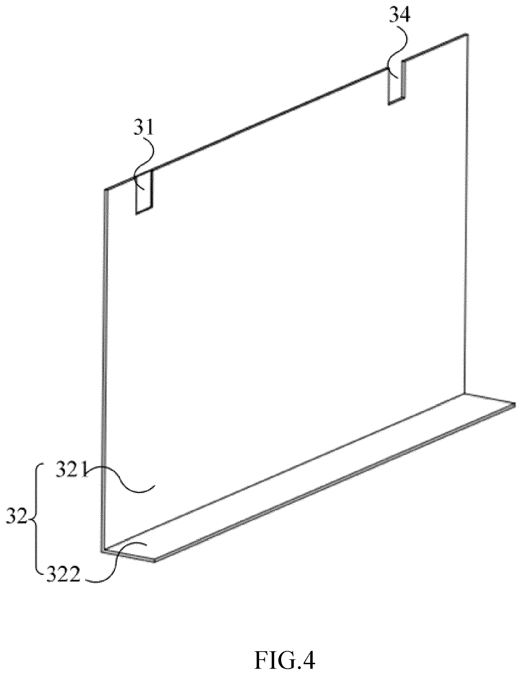

Further, an end surface of at least one of the first main plate 321 and the second main plate 331 close to the cores is provided with a groove 31. That is, as shown in FIG. 4, an end surface of the first main plate 321 close to the first core 1 may be provided with a groove 31, or an end surface of the second main plate 331 close to the second core 2 may be provided with a groove 31, or both. When an end surface of any one of the first main plate 321 and the second main plate 331 close to the cores may be provided with a groove 31, an end surface of the first main plate 321 close to the first core 1 may be provided with a groove 31, as shown in FIG. 4. However, if the thickness of the first main plate 321 is the same as or similar to that of the first temperature sensor 4, the groove 31 may be penetrated to form a through hole, and only a position on the second main plate 331 corresponding to the groove 31 is configured to perform heat transfer, that is, the groove 31 is penetrated through one of the vapor chambers of the vapor chamber assembly 3.

In the present embodiment, each of the L-shaped vapor chambers is first installed with one core, and then one core equipped with the L-shaped vapor chamber is connected with another core equipped with another L-shape vapor chamber by means of connection between the main plates of the vapor chambers. Instead of assembling the two L-shaped vapor chambers into T-shaped vapor chamber and then connecting two cores to the T-shaped vapor chamber, respectively, if the T-shaped vapor chamber is directly used, then a bottom T-shaped structure of the T-shaped vapor chamber may be easily damaged to the cores when the cores and the vapor chambers are assembled, which requires higher device precision. According to the embodiment, the L-shaped vapor chambers are respectively fitted with the cores and then assembled to ensure the product yield.

In some embodiments, the first main plate 321 is integrally formed with the second main plate 331, that is, the vapor chamber assembly is in an inverted T-shape. The first core 1, the second core 2 and the T-shaped vapor chamber assembly are first integrally bonded, and then put into a housing of the battery to facilitate installation of the battery. Further, when a distance between the first core 1 and the second core 2 is fixed, the first main plate 321 and the second main plate 331 are integrated, and the thicknesses of the main plates are relatively large, so that it is easier to excavate the main plate.

In some embodiments, a cavity inside the first main plate 321 is connected with a cavity inside the first flange 322, and a cavity inside the second main plate 331 is connected with a cavity inside the second flange 332, i.e., the liquid working medium inside the first and second vapor chambers 32 and 33 circulates as a whole.

In some embodiments, the battery further includes an aluminum housing (not shown) disposed at the bottom of the first core 1 and the second core 2, the first flange 322 of the first vapor chamber 32 is disposed between the first core 1 and the aluminum housing, and the second flange 332 of the second vapor chamber 33 is disposed between the second core 2 and the aluminum housing. The vapor chambers and the aluminum housing are all made of metal materials, the vapor chambers are provided in an L-shape, and the first flange 322 and the second flange 332 are attached to the bottom aluminum housing to increase a contact area, so that the heat transfer rate is preferable. The first flange 322 and the second flange 332 serve as a heat transfer medium to transfer the heat inside the battery to the outside.

In some embodiments, the first temperature sensor 4 needs to transfer the collected temperature data to another data processing module, such as a chip 6 or the like. If the first temperature sensor 4 is in wireless communication with another data processing module, the first temperature sensor 4 can be snapped into the groove 31. If the first temperature sensor 4 is in wired communication with another data processing module, the groove 31 penetrates through a side surface of the vapor chamber assembly 3, providing a space for wirings of the first temperature sensor 4 and the another data processing module. The side surface is perpendicular to the bottom surface of the groove 31, that is, the side surface is not the bottom surface of the groove 31.

In some embodiments, the at least two cores may include a plurality of cores arranged in an array, where the plurality of cores may be arranged in a linear array in the first direction or may be arranged in any manner, e.g., arranged in a matts pattern. Each of the plurality of cores is adjacent to at least another one of the cores.

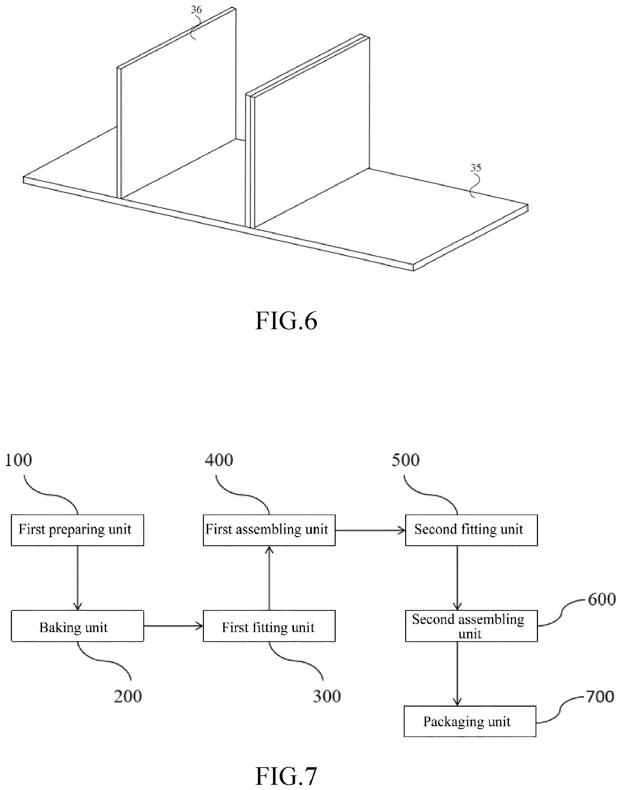

As shown in FIG. 6, the vapor chamber assembly includes a bottom plate 35 and a vertical plate 36 vertically disposed on the bottom plate 35, where the vertical plate 36 is disposed between any two adjacent ones of the cores. In the same battery, one vertical plate 36 may be provided between any two adjacent ones of the cores, two bonded vertical plates 36 may be provided between any two adjacent ones of the cores, or one vertical plate 36 may be provided between any two adjacent ones of a portion of the cores while two bonded vertical plates 36 may be provided between any two adjacent ones of another portion of the cores.

Additionally, an end surface of at least one of the vertical plates 36 in contact with the cores is provided with a groove 31. When one vertical plate 36 is provided between the any two adjacent ones of the cores, both end surfaces of the vertical plate 36 are in contact with the cores. The vertical plate 36 may be provided with a groove 31 in one of the end surfaces or may be provided with a groove 31 in the both end surfaces. When two bonded vertical plates 36 are provided between the any two adjacent ones of the cores, an end surface of one of the vertical plates 36 in contact with the core may be provided with a groove 31, or an end surface of each of the vertical plates 36 in contact with the cores may be provided with a groove 31.

In some embodiments, the battery may further include a cover plate 5 and a chip 6, where the cover plate 5 is disposed on the two cores, the chip 6 is disposed at a side of the cover plate 5 close to the cores, and the chip 6 is communicatively connected to the first temperature sensor 4, that is, temperature data collected by the first temperature sensor 4 is transmitted to the chip 6. When the chip 6 is wired to the first temperature sensor 4, the groove 31 penetrates through the end surface of the vapor chamber assembly 3 close to the cover plate 5, so that a connection line between the chip 6 and the first temperature sensor 4 is arranged.

In some embodiments, a smart module includes a button battery, a chip 6, and a sensor. The battery further includes a button battery (not shown) provided on the cover plate 5. The button battery is electrically connected to the chip 6. The button battery can withstand a high temperature of 105°C, and the capacity and pulse current of the button battery can meet power consumption of the chip 6. Using of the button battery as the power supply of the chip 6 can ensure that the chip 6 operates stably throughout the life cycle of the square battery. The sensor can collect parameters, such as a temperature, and an air pressure, at a fixed point in real time, and transmit the parameters to the cloud without interruption.

In some embodiments, the groove 31 provided in the vapor chamber assembly 3 may be configured to place the first temperature sensor 4. However, other sensors may be further provided inside the battery, to collect other parameters, such as a pressure and a strain. The data collected by different sensors may be transmitted to the chip 6 for processing. A side of the vapor chamber assembly 3 close to the cover plate 5 may be provided with a notch 34, where the notch 34 is a reserved sensor binding point, so that the interference amount between the arranged sensor and a battery cell is reduced, and the influence on the electric performance of the battery is reduced. The vapor chamber assembly 3 may include a first vapor chamber 32 and a second vapor chamber 33, where a first main plate 321 of the first vapor chamber 32 is connected to a second main plate 331 of the second vapor chamber 33, the notch 34 is provided at a side of each of the first main plate 321 and the second main plate 331 close to the cover plate 5, and the notch 34 of the first main plate 321 corresponds to the notch 34 of the second main plate 331.

In some embodiments, a material of the vapor chamber assembly 3 is at least one selected from copper and copper alloys, aluminum and aluminum alloys, stainless steel, or metals and alloys thereof. For example, when the vapor chamber assembly 3 includes the first vapor chamber 32 and the second vapor chamber 33, the first vapor chamber 32 and the second vapor chamber 33 may be made of the same material, or may be made of different materials. Additionally, when the battery includes a plurality of cores and correspondingly includes a plurality of vapor chamber assemblies 3, each of the vapor chamber assemblies 3 may be made of the same material or may be made of a different material.

In some embodiments, surface processing of the vapor chamber assembly 3 may be insulating spraying or electroplating to prevent oxidation of the stainless steel, such as copper plating of stainless steel, which is not required in the case of a pure copper material.

The present disclosure provides a battery module, including: the battery according to any one of the foregoing embodiments and a case body, where the battery is disposed inside the case body.

In an embodiment, the battery includes: at least two cores disposed side by side; a vapor chamber assembly 3 disposed between any two adjacent ones of the cores, where an end surface of the vapor chamber assembly 3 close to the cores is provided with at least one groove 31; and a first temperature sensor 4 disposed in the groove 31.

In an embodiment, the thickness of the first temperature sensor 4 is less than or equal to the depth of the groove 31 in the side-by-side extension direction of the cores.

In an embodiment, the at least two cores may include a first core 1 and a second core 2, the vapor chamber assembly 3 may include a first vapor chamber 32 connected to the first core 1 and a second vapor chamber 33 connected to the second core 2, and the first vapor chamber 32 may be connected to the second vapor chamber 33.

In an embodiment, the first vapor chamber 32 may include a first main plate 321 and a first flange 322 connected with the first main plate 321, and the second vapor chamber 33 may include a second main plate 331 and a second flange 332 connected with the second main plate 331, where the first main plate 321 is bonded to the second main plate 331, the first main plate 321 and the second main plate 331 are provided between the first core 1 and the second core 2, the first flange 322 is extended from an end of the first main plate 321 to a direction away from the second core 2, the second flange 332 is extended from an end of the second main plate 331 to a direction away from the first core 1, and an end surface of at least one of the first main plate 321 and the second main plate 331 close to the cores is provided with a groove 31.

In an embodiment, the first main plate 321 is integrally formed with the second main plate 331.

In an embodiment, a cavity inside the first main plate 321 is connected with a cavity inside the first flange 322, and a cavity inside the second main plate 331 is connected with a cavity inside the second flange 332.

In an embodiment, the battery may further include an aluminum housing, where the first flange 322 of the first vapor chamber 32 is disposed between the first core 1 and the aluminum housing, and the second flange 332 of the second vapor chamber 33 is disposed between the second core 2 and the aluminum housing.

In an embodiment, the at least two cores may include a plurality of cores arranged in an array, where each of the plurality of cores is adjacent to at least another one of the cores. The vapor chamber assembly 3 may include a bottom plate 35 and a vertical plate 36 vertically disposed on the bottom plate 35, where the vertical plate 36 is disposed between any two adjacent ones of the cores, and/or two bonded vertical plates 36 are disposed between any two adjacent ones of the cores. An end surface of at least one of the vertical plates 36 in contact with the cores is provided with the groove 31.

In an embodiment, the groove 31 penetrates through a side surface of the vapor chamber assembly 3, and the side surface is perpendicular to the bottom surface of the groove 31.

In an embodiment, the battery may further include a cover plate 5 disposed on the two cores and a chip 6 disposed on the cover plate 5, where the chip 6 is in communication connection with the first temperature sensor 4.

In an embodiment, the battery may further include a button battery disposed on the cover plate 5 and electrically connected to the chip 6.

In an embodiment, a notch 34 is provided at a side of the vapor chamber assembly 3 close to the cover plate 5.

In an embodiment, a material of the vapor chamber assembly 3 is at least one selected from copper and copper alloys, aluminum and aluminum alloys, stainless steel, or metals and alloys thereof.

In an embodiment, surface processing of the vapor chamber assembly 3 may be insulating spray or electroplating.

In the foregoing embodiments, descriptions of the embodiments are emphasized. A portion that is not described in detail in an embodiment may refer to related descriptions in another embodiment.

### A second embodiment

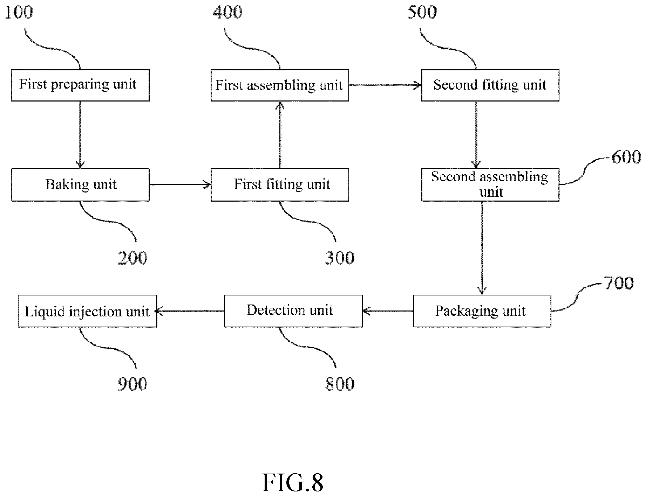

As shown in FIGS. 7-15, the present disclosure may provide a battery production system, including: a first preparing unit 100, a baking unit 200, a first fitting unit 300, a first assembling unit 400, a second fitting unit 500, a second assembling unit 600, and a packaging unit 700.

The first preparing unit 100 is configured to prepare an electrode assembly.

The baking unit 200 is located downstream of the first preparing unit 100 and configured to bake the electrode assembly prepared by the first preparing unit 100. Illustratively, the baking unit 200 is configured to provide a vacuum baking environment for the electrode assembly, such that high-temperature baking is performed for the electrode assembly in the vacuum environment to reduce the water content in the electrode assembly to a safe definition value. Generally, the electrode assembly is baked in an oven in the related art, where a baking temperature is controlled at 85°C-100°C, and a baking time period is controlled for 13 to 15 hours.

The first fitting unit 300 is located downstream of the baking unit 200 and configured to prepare tabs on the baked electrode assembly to form one or more cores. Illustratively, the first fitting unit 300 may be configured to connect the tabs to an electrode sheet by means of welding, to prepare the tabs on the electrode assembly.

The first assembling unit 400 is located downstream of the first fitting unit 300 and configured to assemble a plurality of cores to form a core module. Illustratively, the first assembling unit 400 includes a stacking device in the related art. The stacking device has a mechanical arm for holding and moving an object, to stack the plurality of cores in a predetermined stacking manner to form the core module. It should be understood that a specific structure of the stacking device may refer to the related art, which is not described in detail in the present disclosure.

It should be noted that the core module in the second embodiment and the battery module in the first embodiment belong to different bodies, where the core module is a combination of a plurality of cores, and the battery module is a combination of a plurality of batteries.

The second fitting unit 500 is located downstream of the first assembling unit 400 and configured to weld a connection sheet and a cover plate on the core module to form an assembly. Generally, the second fitting unit 500 may first weld the tabs and connection sheet on the core module, and then weld the connection sheet to the cover plate to form an assembly.

The second assembling unit 600 is located downstream of the second fitting unit 500 and configured to assembly a vapor chamber, a battery management module, and the assembly to form a member to be packaged. In the member, the vapor chamber is disposed at a side surface of the core, and the battery management module is electrically connected to the core and is disposed on the cover plate. Illustratively, the second assembling unit 600 may be a machine device in the related art for connecting the vapor chamber, the battery management module, and the core module, to form a member to be packaged by combining the vapor chamber, the battery management module, and the core module in a set connection manner. It should be noted that a specific arrangement of the second assembling unit 600 may refer to a machine device in the related art for connecting the vapor chamber, the battery management module, and the core module, which is not described in detail in the present disclosure.

The packaging unit 700 is located downstream of the second assembling unit 600 and configured to package the member to form a battery. Generally, the packaging unit 700 is configured to place the core module and the vapor chamber of the member into an aluminum housing, and weld the cover plate and the aluminum housing to form a battery.

It should be understood in the present disclosure that the cores are separately baked, and then assembled with the vapor chamber, so that explosion of the vapor chamber due to high-temperature baking of the vapor chamber is avoided, and safety of battery production is improved.

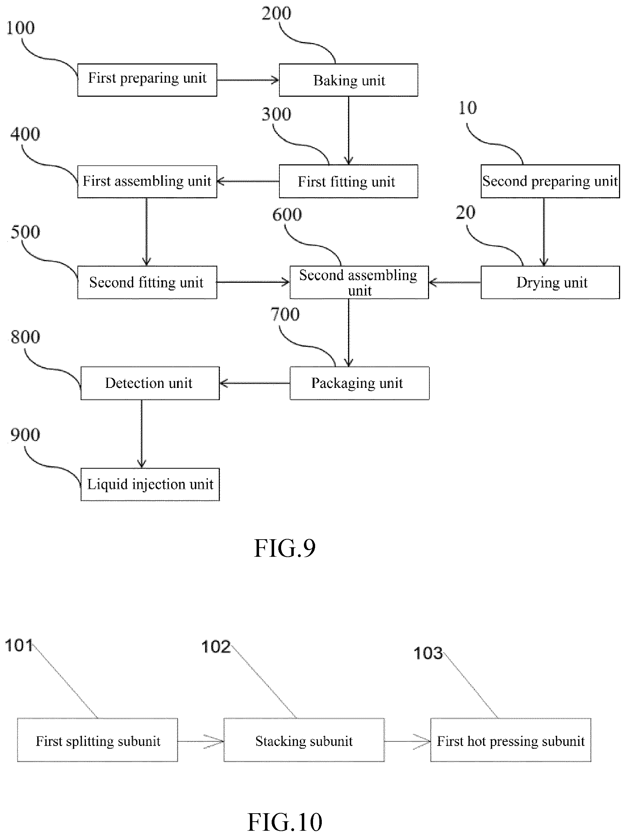

In some embodiments, as shown in FIG. 10, the first preparing unit 100 includes a first slitting subunit 101, a stacking subunit 102, and a first hot pressing subunit 103.

The first slitting subunit 101 is configured to slit a base substrate to form an electrode sheet having a preset specification. Illustratively, the first slitting subunit 101 may be a cutting device in the related art for cutting a base substrate, which may cut the base substrate to form an electrode sheet having a preset specification. It should be noted that a specific arrangement of the first slitting subunit 101 may refer to a cutting device in the related art for cutting the base substrate, which is not described in detail in the present disclosure.

In a preprocessing of the first slitting subunit 101, a substrate which can be used as a positive and negative electrode sheet material is prepared by processing devices such as pulping, coating, and rolling devices. The base substrate may also be obtained by purchase or the like. The pulping is a process in which the active substance powder, the binder, the conductive agent, and the like are uniformly mixed with a solvent according to a certain sequence and conditions to prepare a stable suspension. The coating is a process in which a positive electrode (negative electrode) suspension slurry is uniformly coated on a surface of aluminum foil (copper foil), and then dried to form a film. The rolling is performed by extruding a material through a roller, so that an active substance is brought into close contact with a current collector, a moving distance of electrons is reduced, a thickness of an electrode sheet is reduced, a loading amount is increased, an internal resistance of a battery is reduced, an electric conductivity is increased, a volume utilization rate of the battery is increased, and a battery capacity is increased.

The stacking subunit 102 is located downstream of the first slitting subunit 101 and configured to stack the electrode sheet and a separation membrane to form one or more cores. In the stacking subunit 102, a plurality of positive electrode sheets, a plurality of negative electrode sheets, and a plurality of separation membranes are stacked in an order of the positive electrode sheet, the separation membrane, and the negative electrode sheet, so as to form cores. Illustratively, the stacking subunit 102 includes a mechanical device in the related art for stacking the positive electrode sheets, the separation membranes, and the negative electrode sheets in a preset stacking manner to stack the positive electrode sheets, the separation membranes, and the negative electrode sheets to form an electrode assembly. It should be noted that a specific arrangement of the stacking subunit 102 may refer to a machine device in the related art for stacking the positive electrode sheets, the separation membranes, and the negative electrode sheets in a preset stacking manner, which is not described in detail in the present disclosure.

The first hot pressing subunit 103 is located downstream of the stacking subunit 102 and configured to hot press the electrode assembly. Illustratively, the first hot pressing subunit 103 may be a hot pressing device in the related art for hot pressing a core, where the hot pressing device is configured to hot press the core at a preset temperature and a preset pressure. It should be noted that a specific arrangement of the first hot pressing subunit 103 may refer to a hot pressing device in the related art, which is not described in detail in the present disclosure.

The purpose of hot pressing the electrode assembly is mainly to shape the core, reduce the deviation of the separation membrane of the electrode assembly during the transfer process of the electrode assembly that may cause a short circuit or change of the overhang (that is, the distance between the positive electrode sheet and the negative electrode sheet), eliminate the wrinkle of the separation membrane, remove the air inside the electrode assembly, make the separation membrane and the positive electrode sheet and the negative electrode sheet tightly fit together, shorten the lithium ion diffusion distance, reduce the internal resistance of the battery, improve the flatness of the lithium ion battery, make the thickness of the core meet the requirements and have high consistency, and control the thickness of the core to be within a relatively uniform specification, thereby laying a foundation for placing the core into the housing and the consistency of the battery.

Generally, the hot pressing temperature of the electrode assembly is controlled at 70°C-80°C and the hot pressing time period is controlled for 40s-50s.

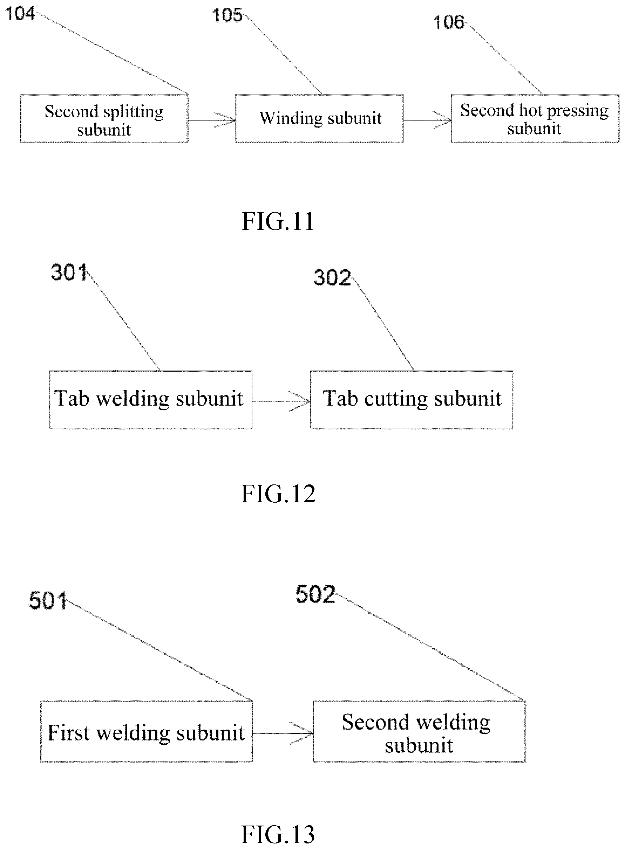

In some embodiments, as shown in FIG. 12, the first fitting unit 300 may include a tab welding subunit 301 and a tab cutting subunit 302.

The tab welding subunit 301 is located downstream of the baking unit 200 and configured to weld a tab base substrate to the baked electrode assembly, typically to the electrode sheet of the electrode assembly. Illustratively, the tab welding subunit 301 may be a mechanical device in the related art having a welding mechanism, such as a welding machine, for welding the tab base substrate to the electrode sheet of the electrode assembly. It should be noted that a specific arrangement of the tab welding subunit 301 may refer to a welding mechanism in the relate art, which is not described in detail in the present disclosure.

The tab cutting subunit 302 is located downstream of the tab welding subunit 301 and configured to cut the tab base substrate welded to the electrode sheet to form a tab having a preset shape. Illustratively, the tab cutting subunit 302 may be a mechanical device in the related art having a cutting mechanism for cutting the tab welded to the core in the preset shape. It should be noted that a specific arrangement of the tab cutting subunit 302 may refer to a mechanical device having a cutting mechanism in the related art, which is not described in detail in the present disclosure.

In some embodiments, as shown in FIG. 13, the second fitting unit 500 may include a first welding subunit 501 and a second welding subunit 502.

The first welding subunit 501 is located downstream of the first assembling unit 400 and configured to weld a connection sheet on the tab of the core module. The connection sheet is configured to connect the tab and a pole on the cover plate to realize the effect of guiding the current inside the battery. Illustratively, the first welding subunit 501 may be a mechanical device having a welding mechanism in the related art, such as a welding machine, for welding the tab and the connection sheet. It should be noted that a specific arrangement of the first welding subunit 501 may refer to a welding machine in the related art, which is not described in detail in the present disclosure.

The second welding subunit 502 is located downstream of the first welding subunit 501 and configured to weld the cover plate to the connection sheet on the core module to form an assembly. Illustratively, the second welding subunit 502 may be a mechanical device in the related art for welding the cover plate to the connection sheet on the core module, a specific arrangement of which may refer to the mechanical device in the related art, which is not described in detail in the present disclosure.

In some embodiments, as shown in FIG. 11, the first preparing unit 100 may include a second slitting subunit 104, a winding subunit 105, and a second hot pressing subunit 106.

The second slitting subunit 104 is configured slit the base substrate into rolls having a predetermined specification, the base substrate of which is a film roll prepared by the preceding process or a film roll purchased. Illustratively, the second slitting subunit 104 may be a cutting device in the related art for cutting the base substrate to form rolls having a predetermined specification, a specific arrangement of which may refer to the cutting device in the related art, which is not described in detail in the present disclosure.

The winding subunit 105 is located downstream of the second slitting subunit 104 and configured to wind the rolls and the separation membrane to form one or more cores. Illustratively, the winding subunit 105 may be a winding device in the related art for winding the cutted rolls with the separation membrane to form the cores, a specific arrangement of which may refer to the winding device in the related art, which is not described in detail in the present disclosure.

The second hot pressing subunit 106 is located downstream of the winding subunit 105 and configured to hot press the wound core. Illustratively, the second hot pressing subunit 106 may be a hot pressing device having a hot pressing function in the related art, where the hot pressing device may be configured to hot press the core at a preset temperature and a preset pressure. It should be noted that a specific arrangement of the second hot pressing subunit 106 may refer to the hot pressing device in the related art, which is not described in detail in the present disclosure.

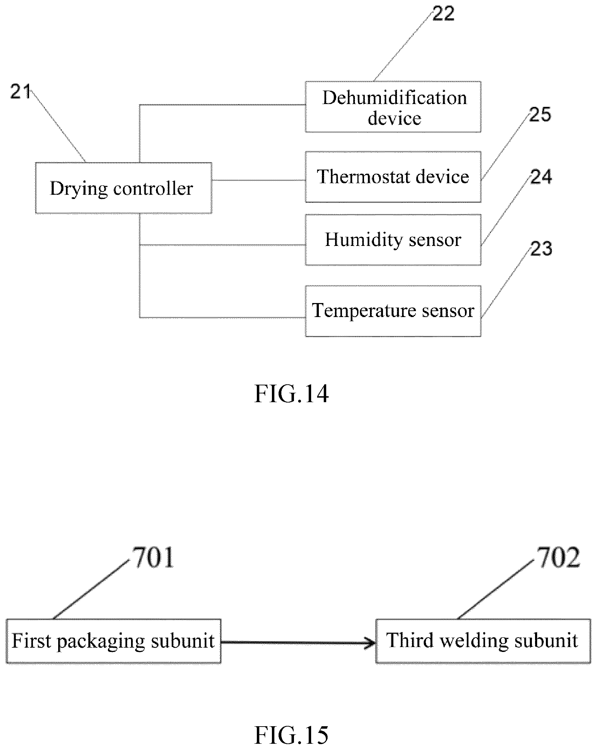

In some embodiments, as shown in FIG. 15, the packaging unit 700 may include a first packaging subunit 701 and a third welding subunit 702.

The first packaging subunit 701 is located downstream of the second assembling unit 600 and configured to place a member to be packaged in the housing the battery. That is, the first packaging subunit 701 places a battery module, a vapor chamber, and a battery management module into the housing of the battery, so that the cover plate covers the housing of the battery. Illustratively, the first packaging subunit 701 may be a mechanical device having a moving mechanism, for example, a housing inserter, for placing a member to be packaged into the housing of the battery and enable the cover plate to cover the housing of the battery. It should be noted that a specific arrangement of the first packaging subunit 701 may refer to a housing inserter in the related art, which is not described in detail in the present disclosure.

The third welding subunit 702 is located downstream of the first packaging subunit 701 and configured to weld the cover plate of the member to the housing of the battery to form the battery. Illustratively, the third welding subunit 702 may be a mechanical device having a welding mechanism, such as a welding machine, for welding the cover plate to the housing of the battery integrally.

In some embodiments, as shown in FIG. 9, the battery production system may further include a detection unit 800 and a liquid injection unit 900.

The detection unit 800 is located downstream of the first packaging subunit 701 and configured to perform air tightness detection of the battery. Illustratively, the detection unit includes a mechanical device having: a gas injection mechanism for injecting helium into the battery, and a detection sensor for detecting whether the housing of the battery leaks helium to determine whether the gas tightness of the housing of the battery is qualified. It should be noted that a specific arrangement of the detection unit 800 may refer to a helium detector in the related art, which is not described in detail in the present disclosure. The mechanical device having the gas injection mechanism and the detection sensor is typically an ammonia tester.

The liquid injection unit 900 is located downstream of the detection unit 800 and configured to inject an electrolyte into the battery that is qualified for the air tightness detection. That is, the liquid injection unit 900 is configured inject the electrolyte from a liquid injection hole into the battery according to a certain capacity, and used as a medium for ion transport while chemically reacting the electrolyte and the electrode sheet. It should be noted that a specific arrangement of the liquid injection unit 900 may refer to a liquid injection machine in the related art, which is not described in detail in the present disclosure.

In some embodiments, as shown in FIG. 9, the battery system may further include a second preparing unit 10 and a drying unit 20.

The second preparing unit 10 is configured to prepare a vapor chamber. The drying unit 20 is located upstream of the second fitting unit 500 and downstream of the second preparing unit 10, and configured to dry the prepared vapor chamber.

The drying unit 20 dries the vapor chamber at a room temperature or a predetermined temperature slightly higher than the room temperature to remove moisture from the vapor chamber.

In some embodiments, as shown in FIG. 14, the drying unit 20 may include a drying controller 21, a thermostat device 23, and a dehumidification device 22. The thermostatic device 23 is connected to the drying controller 21 and configured to receive a temperature control signal from the drying controller 21 and adjust the temperature of the environment in which the vapor chamber is located. The dehumidification device 22 is connected to the drying controller 21 and configured to receive a dehumidification control signal from the drying controller 21 and adjust the humidity of the environment in which the vapor chamber is located. Illustratively, the thermostat device 23 may be an art air conditioning system in the related art for adjusting the temperature of the environment in which the drying unit 20 is located. Illustratively, the dehumidification device 22 may be an air conditioning system in the related art for adjusting the humidity of the environment in which the drying unit 20 is located.

It should be understood that the temperature and humidity of the environment in which the vapor chamber is located may be controlled by the thermostat device 23 and the dehumidification device 22 to ensure that both the temperature and humidity of the environment in which the drying unit 20 and the vapor chamber are located may be within set ranges.

The drying unit 20 further includes a second temperature sensor 25 and a humidity sensor 24, both of which are electrically connected to the drying controller 21. The second temperature sensor 25 is configured to detect an ambient temperature of the environment in which a carrier is located and feed the ambient temperature back to the drying controller 21, and the humidity sensor 24 is configured to monitor the ambient humidity of the environment in which the carrier is located and feed the ambient humidity back to the drying controller 21.

In some embodiments, the battery production system may further include: a first transport unit located between the first preparing unit 100 and the baking unit 200; a second transport unit located between the baking unit 200 and the first fitting unit 300; a third transport unit located between the first fitting unit 300 and the first assembling unit 400; a fourth transport unit located between the first assembling unit 400 and the second fitting unit 500; a fifth transport unit located between the second fitting unit 500 and the second assembling unit 600; and a sixth transport unit located between the second assembling unit 600 and the packaging unit 700.

It should be understood that the first transport unit is located between the first preparing unit 100 and the baking unit 200 and configured to transport the cores to the baking unit 200. The second transport unit is located between the baking unit 200 and the first fitting unit 300 and configured to transport the baked cores to the first fitting unit 300. The third transport unit is located between the first fitting unit 300 and the first assembling unit 400 and configured to transport the cores having the tabs to the first assembling unit 400. The fourth transport unit is located between the first assembling unit 400 and the second fitting unit 500 and configured to transport the core module to the second fitting unit 500. The fifth transport unit is located between the second fitting unit 500 and the second assembling unit 600 and configured to transport the assembly to the second assembling unit 600. The sixth transport unit is located between the second assembling unit 600 and the packaging unit 700 and configured to transport the member to be package to the packaging unit 700.

Illustratively, the first transport unit, the second transport unit, the third transport unit, the fourth transport unit, the fifth transport unit, and the sixth transport unit may be transfer robots in the related art that may have a movable base and a mechanical arm for clamping an obj ect.

## Claims

1. A battery, comprising:
at least two cores disposed side by side;
a vapor chamber assembly disposed between any two adjacent ones of the cores, wherein an end surface of the vapor chamber assembly close to the cores is provided with at least one groove; and
a first temperature sensor disposed in the groove.

2. The battery of claim 1, wherein a thickness of the first temperature sensor is less than or equal to a depth of the groove in a side-by-side extension direction of the cores.

3. The battery of claim 1, wherein the at least two cores comprise a first core and a second core, the vapor chamber assembly comprises a first vapor chamber connected to the first core and a second vapor chamber connected to the second core, and the first vapor chamber is connected to the second vapor chamber.

4. The battery of claim 3, wherein
the first vapor chamber comprises a first main plate and a first flange connected with the first main plate, and the second vapor chamber comprises a second main plate and a second flange connected with the second main plate, wherein the first main plate is bonded to the second main plate, the first main plate and the second main plate are provided between the first core and the second core, the first flange is extended from an end of the first main plate to a direction away from the second core, and the second flange is extended from an end of the second main plate to a direction away from the first core; and
an end surface of at least one of the first main plate and the second main plate close to the cores is provided with the groove.

5. The battery of claim 4, wherein the first main plate is integrally formed with the second main plate.

6. The battery of claim 4, wherein a cavity inside the first main plate is connected with a cavity inside the first flange, and a cavity inside the second main plate is connected with a cavity inside the second flange.

7. The battery of claim 4, further comprising: an aluminum housing, wherein the first flange of the first vapor chamber is disposed between the first core and the aluminum housing, and the second flange of the second vapor chamber is disposed between the second core and the aluminum housing.

8. The battery of claim 1, wherein
the at least two cores comprise a plurality of cores arranged in an array, wherein each of the plurality of cores is adjacent to at least another one of the cores, and the vapor chamber assembly comprises a bottom plate and a vertical plate vertically disposed on the bottom plate;
one vertical plate is provided between any two adjacent ones of the cores; and/or two bonded vertical plates are provided between any two adjacent ones of the cores; and
an end surface of at least one of the vertical plates in contact with the cores is provided with the groove.

9. The battery of any one of claims 1-8, wherein the groove penetrates through a side surface of the vapor chamber assembly perpendicular to a bottom surface of the groove.

10. The battery of any one of claims 1-8, further comprising: a cover plate disposed on the cores and a chip disposed on the cover plate, wherein the chip is in communication connection with the first temperature sensor.

11. The battery of claim 10, further comprising: a button battery disposed on the cover plate and electrically connected to the chip.

12. The battery of claim 10, wherein a notch is provided at a side of the vapor chamber assembly close to the cover plate.

13. A battery module, comprising: the battery of any one of claims 1-12 and a case body, wherein the battery is disposed inside the case body.

14. A battery production system for preparing the battery of any one of claims 1-12, comprising:
a first preparing unit for preparing an electrode assembly;
a baking unit located downstream of the first preparing unit and configured to bake the electrode assembly;
a first fitting unit located downstream of the baking unit and configured to prepare tabs on the baked electrode assembly to form one or more cores;
a first assembling unit located downstream of the first fitting unit and configured to assemble a plurality of cores to form a core module;
a second fitting unit located downstream of the first assembling unit and configured to weld a connection sheet and a cover plate on the core module to form an assembly;
a second assembling unit located downstream of the second fitting unit and configured to assembly a vapor chamber, a battery management module, and the assembly to form a member to be packaged; and
a packaging unit located downstream of the second assembling unit and configured to package the member to form the battery.

15. A method for assembling the battery of any one of claims 1-12 by using the battery production system of claim 14 for preparing the battery, comprising:
preparing an electrode assembly;
baking the electrode assembly;
preparing tabs on the baked electrode assembly to form one or more cores;
drying the prepared vapor chamber; and
assembling the dried vapor chamber and the baked cores.
